(19) Europäisches Patentamt
European Patent Office
Office européen des brevets

(11) Veröffentlichungsnummer: **0 229 967**
**A2**

(12) **EUROPÄISCHE PATENTANMELDUNG**

(21) Anmeldenummer: **86117006.6**

(22) Anmeldetag: **08.12.86**

(51) Int. Cl.[4]: **C 09 B 62/085**, D 06 P 1/382

(30) Priorität: **20.12.85 DE 3545462**

(43) Veröffentlichungstag der Anmeldung: **29.07.87 Patentblatt 87/31**

(84) Benannte Vertragsstaaten: **CH DE FR GB LI**

(71) Anmelder: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen (DE)**

(54) **Reaktivfarbstoffe.**

(57) eignen sich hervorragend zum Färben und Bedrucken von Hydroxylgruppen- oder Amidgruppen enthaltenden Materialien. Sie liefern klare rote Färbungen mit guten Naß- und Lichtechtheiten.

EP 0 229 967 A2

0229967

BAYER AKTIENGESELLSCHAFT
Konzernverwaltung RP
Patentabteilung

5090 Leverkusen, Bayerwerk

My/ABc

## Reaktivfarbstoffe

Gegenstand der Erfindung sind Farbstoffe der Formel

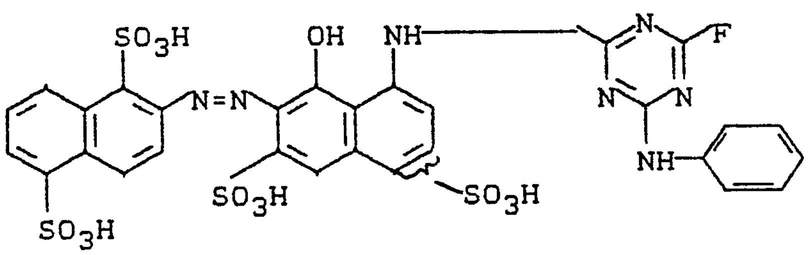

(1)

Sie werden hergestellt, indem man 1-Amino-8-hydroxynaphthalin-3,6-disulfonsäure (H-Säure) oder 1-Amino-8-hydroxynaphthalin-4,6-disulfonsäure nach den Angaben der Deutschen Offenlegungsschrift 2 747 011 zunächst mit 2,4,6-Trifluortriazin kondensiert, ein zweites Fluoratom gegen den Anilinorest ausgetauscht und das Monofluortriazinprodukt im wäßrigen neutralen Medium mit diazotierter 2-Amino-naphthalin-1,5-disulfonsäure kuppelt.

0229967

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls durch Zugabe eines Puffer-Gemisches beispielsweise Mono- und Dinatriumphosphat, getrocknet werden; vorzugsweise wird die Trocknung bei nicht zu hohen Temperaturen und unter vermindertem Druck vorgenommen. Durch Zerstäubungstrocknung des Herstellungsgemisches kann man trockene Präparate direkt, d.h. ohne Zwischenisolierung der Farbstoffe herstellen.

Die Rektivfarbstoffe der Formel (1) zeichnen sich durch hohe Reaktivität aus. Sie ergeben klare rote Färbungen mit guten Naß- und Lichtechtheiten. Besonders hervorzuheben ist, daß die Farbstoffe eine gute Löslichkeit und Elektrolytlöslichkeit bei guteen Auszieheigenschaften und hoher Farbstoff-Fixierung aufweisen, und daß sich die nicht fixierten Anteile leicht entfernen lassen.

Die neuen Farbstoffe der Formel (1) eignen sich zum Färben und Bedrucken von Hydroxyl- oder Amidgruppen enthaltenden Materialien, wie Textilfaser-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Beispiel

0,5 mol 1-Amino-8-hydroxynaphthalin-3,6-disulfonsäure (H-Säure) werden in 850 ml Wasser mit 50 ml 40 volumen-%iger Natronlauge gelöst; pH 6,0. Man setzt 500 g Eis und 34,5 g Borsäure (0,5 mol) zu und läßt dann in 20 Minuten 45 ml 2,4,6-Trifluortriazin einlaufen, wobei man zunächst den pH auf 3,8 bis 4 abfallen läßt und ihn dann durch Eintropfen von 15 %iger Sodalösung in diesem Bereich hält. Nach beendeter Zugabe rührt man noch 3 Minuten nach und überzeugt sich durch eine Titration von der Vollständigkeit der Acylierung. Volumen 1700 ml. Temp. 0°C. In die klare Lösung gibt man 46,5 g Anilin, wobei die bei der Kondensation freiwerdende Flußsäure mit 15 %iger Sodalösung so neutralisiert wird, daß der pH der Lösung bei 5,0 bis 6 gehalten wird. Man rührt noch 30 Minuten nach, wobei die Temperatur von 0°C auf 10-15°C ansteigt. Im Dünnschichtchromatogramm erkennt man, daß sich das Trifluortriazin vollständig umgesetzt hat. Man gibt dann die in üblicher Weise aus 0,5 mol 2-Amino-naphthalin-1,5-disulfonsäure hergestellte Diazoverbindung zu und kuppelt bei pH 6 bis 7. Wenn keine Diazoverbindung mehr nachgewiesen werden kann, wird der entstandene rote Farbstoff durch Zugabe von Natriumchlorid ausgefällt, abfiltriert und getrocknet. Nach einem der für Reaktivfarbstoffe üblichen Applikationsverfahren erhält man damit auf Baumwolle klare blaustichig rote Färbungen (Farbkennzahl 8).

Der Farbstoff entspricht der Formel

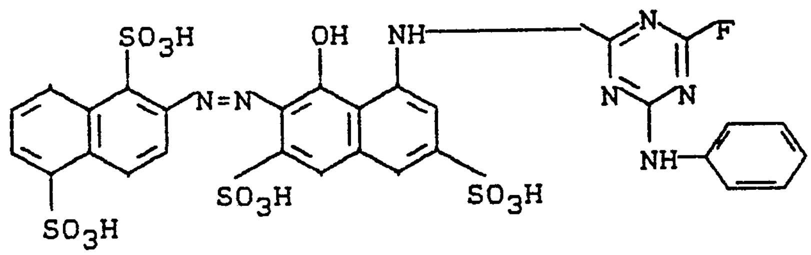

(1)

Nach der Arbeitsweise dieses Beispiels erhält man gleichfalls einen wertvollen Farbstoff, wenn man anstelle der H-Säure eine äquivalente Menge K-Säure einsetzt.

Patentansprüche

1. Farbstoffe der Formel

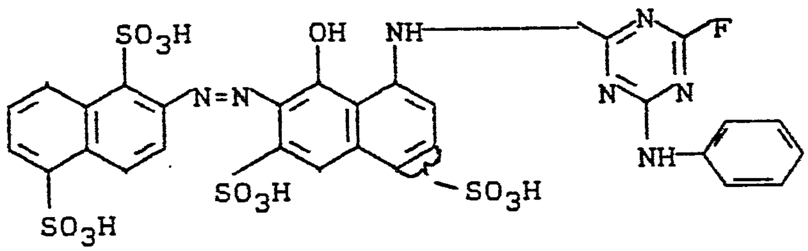

(1)

2. Verwendung der Farbstoffe aus Anspruch 1 zum Färben und Bedrucken von Hydroxylgruppen- oder Amidgruppen enthaltenden Materialien.

3. Mit den Farbstoffen des Anspruches 1 gefärbte oder bedruckte Hydroxylgruppen- oder Amidgruppen enthaltende Materialien.